# EUROPEAN PATENT APPLICATION

(11) **EP 4 632 637 A1**
(43) Date of publication of application: **15.10.2025**
(21) Application number: 24848750.6
(22) Date of filing: 26.06.2024
(51) Int. Cl.: G06N 20/00, G06F 18/27

(54) **INFORMATION PROCESSING METHOD, PROGRAM, AND INFORMATION PROCESSING DEVICE**

(30) Priority: 31.07.2023 US 202363529836 P; 27.10.2023 JP 2023184980
(71) Applicant: Eigenbeats LLC, Chofu-shi, Tokyo 182-0013 (JP)
(72) Inventor: NAKANISHI, Takafumi, Chofu-shi, Tokyo 182-0013 (JP)
(74) Representative: Cabinet Beaumont
(86) International application number: PCT/JP2024/023092
(87) International publication number: WO 2025/028090

(57) **Abstract**

Provided is an information processing method, etc. that assists a user in interpreting behavior of a generated machine learning model. In the information processing method, a computer executes processing of recording a plurality of sets of an explanatory data vector xn input to an existing machine learning model (21) and an objective data vector yn output from the machine learning model (21) in association with each other, calculating an interpretation matrix A† which is a vector product of an explanatory matrix X in which a plurality of sets of the explanatory data vector xn is arranged and a generalized inverse matrix of an objective matrix Y in which the objective data vector yn is arranged in an order corresponding to the explanatory data vector X, and outputting a chart (41, 42, and 43) related to the interpretation matrix A†.

## Description

### Technical Field

The present invention relates to an information processing method, a program, and an information processing device.

### Background Art

There has been a proposed system that uses a machine learning model to classify images and displays regions contributing to classification using a heat map (Patent Literature 1).

### Prior Art Document

### Patent Literature:

Patent Literature 1: Japanese Patent Application Laid-Open No. 2023-83555

### Summary of the Invention

### Problems to be Solved by the Invention

Machine learning models generated by machine learning are black boxes, making it difficult for users to interpret behavior thereof.

An object of an aspect is to provide an information processing method, etc. that assists a user in interpreting behavior of a generated machine learning model.

### Means for Solving the Problems

In an information processing method, a computer executes processing of recording a plurality of sets of an explanatory data vector input to an existing machine learning model and an objective data vector output from the machine learning model in association with each other, calculating an interpretation matrix which is a vector product of an explanatory matrix in which a plurality of sets of the explanatory data vector is arranged and a generalized inverse matrix of an objective matrix in which the objective data vector is arranged in an order corresponding to the explanatory data vector, and outputting a chart related to the interpretation matrix.

### Advantageous Effects of the Invention

In an aspect, it is possible to provide an information processing method, etc. that assists a user in interpreting behavior of a generated machine learning model.

### Brief Description of the Drawings

FIG. 1 is an explanatory diagram describing an outline of AIME.
FIG. 2 is an explanatory diagram describing a method of calculating an interpretation matrix A†.
FIG. 3 is an explanatory diagram describing a configuration of an information processing device.
FIG. 4 is a flowchart describing a flow of a program for calculating the interpretation matrix A†.
FIG. 5 is an explanatory diagram describing an outline of a method of creating a similarity distribution plot.
FIG. 6 is a flowchart describing a processing flow of a program for generating the similarity distribution plot.
FIG. 7 is an explanatory diagram describing a record layout of an explanatory-objective DB.
FIG. 8 is an explanatory diagram describing a global feature importance graph.
FIG. 9A is an example of a local feature importance graph.
FIG. 9B is an example of the local feature importance graph.
FIG. 10 is an example of a similarity distribution plot.
FIG. 11 is an example of the similarity distribution plot.
FIG. 12 is an example of the similarity distribution plot.
FIG. 13 is an explanatory diagram describing local feature importance related to an existing model.
FIG. 14 is an example of the similarity distribution plot related to the existing model.

### Description of the Invention

### [Embodiment 1]

Various machine learning algorithms are used to generate a machine learning model that receives input of explanatory data and outputs objective data. The generated machine learning model is usually a black box, and it is difficult for a human to interpret a decision-making process from inputting explanatory data to outputting objective data.

However, when the machine learning model is utilized for real-world decision-making, it is important that human can interpret the decision-making process of the machine learning model. For example, when the output objective data seems to deviate significantly from human common sense, if the human can appropriately interpret the decision-making process of the machine learning model, the human can make appropriately decision about how to handle the objective data and the machine learning model.

With regard to the objective data output from the machine learning model, a technology that describes a reason for output is referred to as XAI (explainable AI). For example, there are known XAI technologies such as LIME (Local Interpretable Model Agnostic Explanations), which is suitable for describing local behavior of the machine learning model, and SHAP (Shapley Additive Explanation), which is suitable for evaluating importance of explanatory variables.

In this embodiment, a description will be given of an information processing method that supports a user to interpret behavior of a machine learning model from various perspectives. The information processing method described below is referred to as AIME (Approximate Inverse Model Explanations).

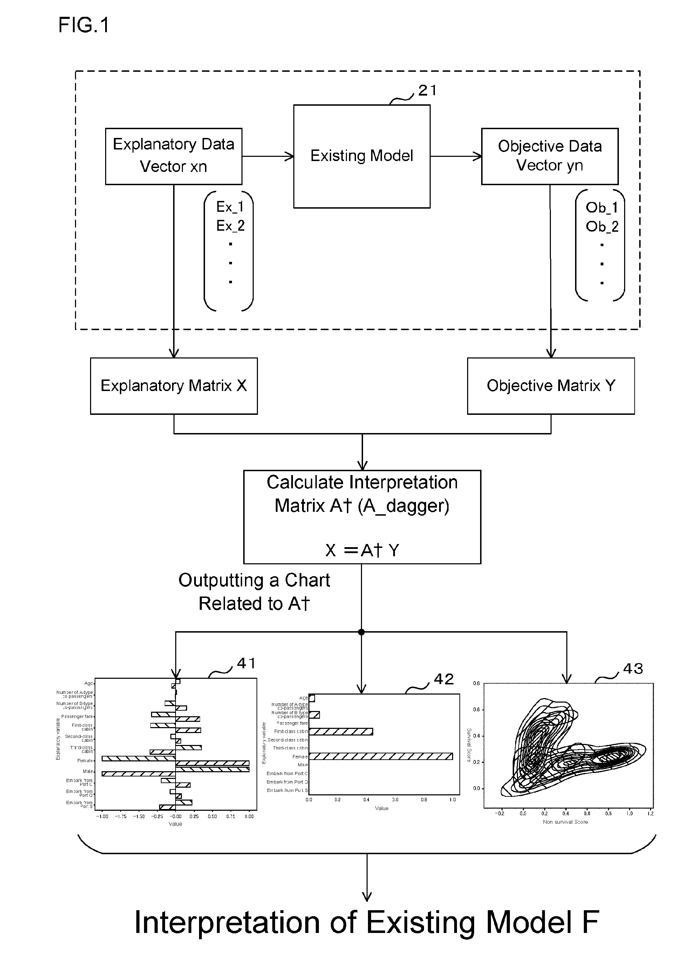

FIG. 1 is an explanatory diagram describing an outline of AIME. FIG. 1 will be used to describe a procedure for interpreting behavior of an existing model 21, which is a generated machine learning model, using AIME. The existing model 21 is a machine learning model that receives input of an explanatory data vector xn and outputs an objective data vector yn.

The existing model 21 is a machine learning model generated using any supervised machine learning algorithm, such as a convolutional neural network (CNN), a recurrent neural network (RNN), or a random forest. The existing model 21 may be a machine learning model generated using any unsupervised machine learning algorithm, such as reinforcement learning or a generative adversarial network (GAN).

A procedure of inputting the explanatory data vector xn to the existing model 21 and acquiring the objective data vector yn is repeated a plurality of times. When the existing model 21 is generated by supervised machine learning, a part or all of training data used in the machine learning may be used in the explanatory data vector xn. The explanatory data vector xn may be generated randomly or based on a predetermined rule.

An explanatory matrix X, which is a two-dimensional matrix, is generated by arranging a plurality of explanatory data vectors xn in a row direction. Similarly, an objective matrix Y, which is a two-dimensional matrix, is generated by arranging a plurality of objective data vectors yn in the row direction. Here, an arrangement order of the explanatory data vectors xn is the same as an arrangement order of the corresponding objective data vectors yn.

Note that, in order to execute subsequent processes, the objective data vectors yn need to be linearly independent. That is, the vector product of the objective matrix Y and the transposed matrix of the objective matrix Y needs to be a regular matrix.

An interpretation matrix A†, which is a matrix whose vector product with the objective matrix Y is equal to the explanatory matrix X as illustrated in Equation (1), is calculated based on the explanatory matrix X and the objective matrix Y. Details of a method of calculating the interpretation matrix A† will be described later. $X = A † Y$

Charts such as a global feature importance graph 41 indicating overall behavior of the existing model 21, a local feature importance graph 42 indicating interpretation of each of the objective data vectors yn, and a similarity distribution plot 43 indicating a distribution of similarity between the explanatory data vectors xn are created by plotting the interpretation matrix A†. By using these charts, the user can interpret the behavior of the existing model 21. Details of the global feature importance graph 41, the local feature importance graph 42, and the similarity distribution plot 43 will be described later.

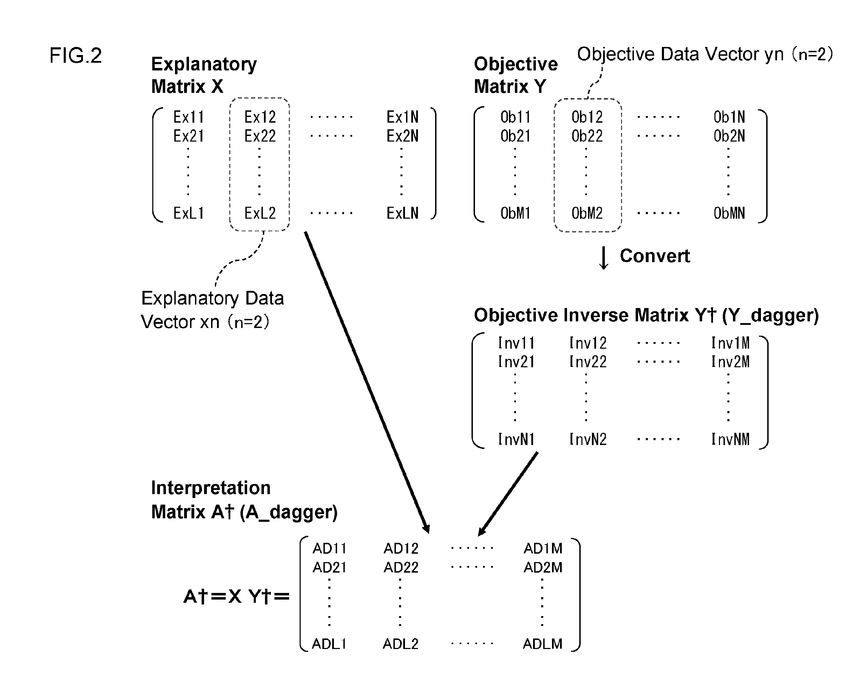

FIG. 2 is an explanatory diagram describing a method of calculating the interpretation matrix A†. In the following description, N is a natural number indicating the number of times that a process of inputting the explanatory data vectors xn to the existing model 21 and acquiring the objective data vectors yn is repeated. n is a natural number indicating an nth time for which a vector is input to the existing model 21 or output from the existing model 21.

The explanatory data vectors xn have L elements from Ex1n to ExLn. The objective data vectors yn have M elements from Ob1n to ObMn. Here, L and M are natural numbers. In FIG. 2, the explanatory data vectors xn and the objective data vectors yn, where n = 2, are surrounded by dashed lines.

As described above, the explanatory matrix X, which is a two-dimensional matrix, is created by arranging N explanatory data vectors xn obtained by N processes in the row direction. The explanatory matrix X is a two-dimensional matrix having L rows and N columns. Similarly, the objective matrix Y, which is a two-dimensional matrix, is generated by arranging N objective data vectors yn in the row direction. The objective matrix Y† is a two-dimensional matrix having M rows and N columns.

With regard to the objective matrix Y, Y†, which is a Moore-Penrose generalized inverse matrix, is calculated. In the following description, Y† may be referred to as an objective inverse matrix Y†. The objective inverse matrix Y† is calculated by Equation (2). The objective inverse matrix Y† is a matrix having N rows and M columns. $Y † = YT \left(Y YT\right) - 1$

The interpretation matrix A† is the vector product of the explanatory matrix X and the objective inverse matrix Y†. An equation for calculating the interpretation matrix A† is illustrated in Equation (3). $A † = X Y †$

The interpretation matrix A† is a two-dimensional matrix having L rows and M columns, i.e., the same number of rows as the number of elements in the explanatory data vector xn and the same number of columns as the number of elements in the objective data vector yn. An element at row a and column b of the interpretation matrix A† indicates an influence of an ath element of the explanatory data vector xn on a bth element of the objective data vector yn.

As a result, even when there is no information such as an algorithm and training data used to generate the existing model 21, as long as there is an environment in which the existing model 21 can be used, the interpretation matrix A† can be generated. In other words, even when the existing model 21 is in a black box state generated by a third party, the interpretation matrix A† can be generated.

For reference, an outline of transformation for deriving Equation (3) from Equations (1) and (2) is illustrated below. First, both sides of Equation (1) are multiplied by a transposed matrix of the objective matrix Y from the right to obtain Equation (4). $X YT = A † Y YT$

As described above, the vector product of the objective matrix Y and the transposed matrix of the objective matrix Y is a regular matrix, so that the inverse matrix can be calculated. Both sides of Equation (4) are multiplied by this inverse matrix from the right to obtain Equation (5). $X YT \left(Y YT\right) - 1 = A † \left(Y YT\right) \left(Y YT\right) - 1 = A †$

When the left side and the right side of Equation (5) are swapped, and then Equation (2) is substituted into the right side, Equation (6) is obtained. Equation (3) can be derived from both ends of equation (6). $A † = X YT \left(Y YT\right) - 1 = X Y †$

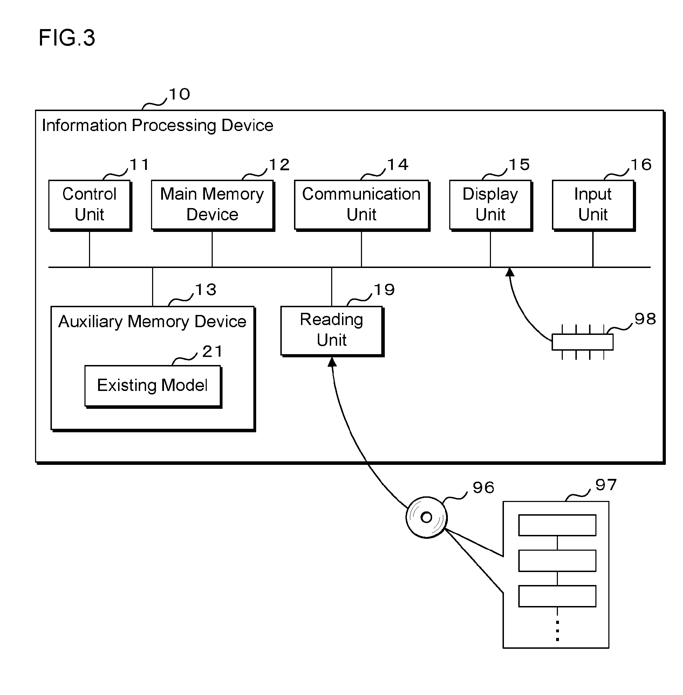

FIG. 3 is an explanatory diagram describing a configuration of an information processing device 10. The information processing device 10 includes a control unit 11, a main memory device 12, an auxiliary memory device 13, a communication unit 14, a display unit 15, an input unit 16, a reading unit 19, and a bus.

The control unit 11 is an arithmetic control device that executes a program of this embodiment. One or more central processing units (CPUs), graphics processing units (GPUs), tensor processing units (TPUs), multi-core CPUs, etc. are used in the control unit 11. The control unit 11 is connected to each hardware unit included in the information processing device 10 via the bus.

The main memory device 12 is a storage device such as a static random access memory (SRAM), a dynamic random access memory (DRAM), or a flash memory. The main memory device 12 temporarily stores information required during processing performed by the control unit 11 and programs being executed by the control unit 11.

The auxiliary memory device 13 is a storage device such as an SRAM, a flash memory, a hard disk, or a magnetic tape. The auxiliary memory device 13 stores the existing model 21, programs executed by the control unit 11, and various data required for executing the programs. The existing model 21 may be stored in an external storage device connected via a network.

The communication unit 14 is an interface for communication between the information processing device 10 and a network. The display unit 15 is, for example, a liquid crystal display device or an organic EL (Electro Luminescence) display device. The input unit 16 is, for example, an input device such as a keyboard, a mouse, a trackball, or a microphone.

A portable recording medium 96 is, for example, a universal serial bus (USB) memory, a compact disc read only memory (CD-ROM), a magneto-optical disc medium, another optical disc medium, an SD memory card, etc. The portable recording medium 96 stores a program 97 that realizes AIME.

The reading unit 19 is an interface capable of connecting the portable recording medium 96, such as a USB connector, a CD-ROM drive, or an SD memory reader. A semiconductor memory 98 stores the program 97, and is a memory that can be attached inside the information processing device 10.

The information processing device 10 is a general-purpose personal computer, a tablet, a mainframe, a virtual machine operating on the mainframe, or a quantum computer. The information processing device 10 may include hardware such as a mainframe or a plurality of personal computers that performs distributed processing. The information processing device 10 may include a cloud computing system. The information processing device 10 may include hardware such as a mainframe or a plurality of personal computers that operates in cooperation with each other.

The program 97 is recorded on the portable recording medium 96. The control unit 11 reads the program 97 via the reading unit 19 and stores the program 97 in the auxiliary memory device 13. In addition, the control unit 11 may read the program 97 stored in the semiconductor memory 98. Furthermore, the control unit 11 may download the program 97 from another server computer (not illustrated) connected via the communication unit 14 and a network (not illustrated) and store the program 97 in the auxiliary memory device 13.

The program 97 is installed as a control program for the information processing device 10, and is executed by being loaded into the main memory device 12. The program 97 of this embodiment is an example of a program product.

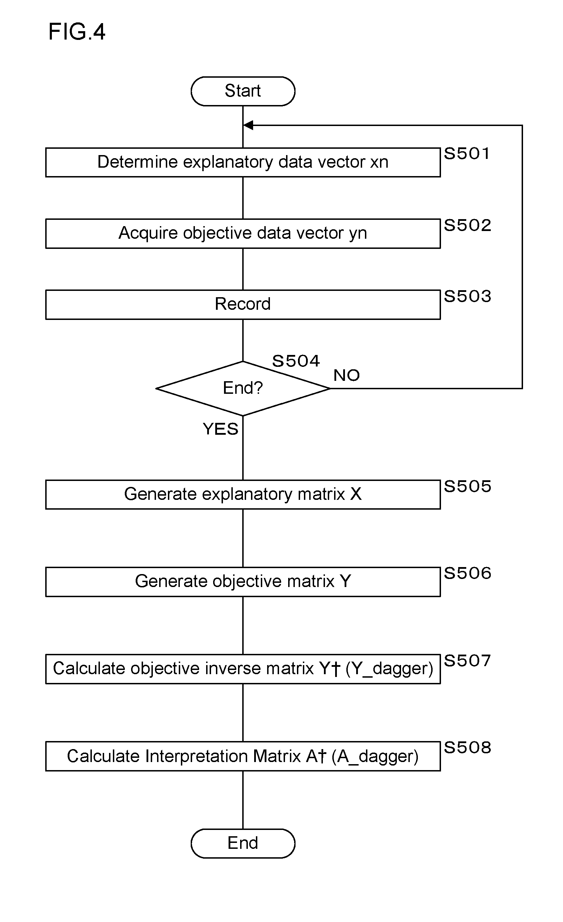

FIG. 4 is a flowchart describing a flow of a program for calculating the interpretation matrix A†. The control unit 11 determines the explanatory data vector xn input to the existing model 21 for the nth time (step S501). When training data used for the machine learning of the existing model 21 is available, the existing model 21 may extract the explanatory data vector xn from the training data.

The control unit 11 may generate the explanatory data vector xn randomly or based on a predetermined rule. When the control unit 11 generates the explanatory data vector xn, it is desirable to generate the explanatory data vector xn within a range in which use of the existing model 21 is expected. For example, when the explanatory data vector xn including an unexpected element such as "a human age is 200 years" is generated, the behavior of the existing model 21 cannot be correctly interpreted.

Similarly, it is desirable that a distribution of the plurality of explanatory data vectors xn coincides with the range in which use of the existing model 21 is expected. For example, in the case of the existing model 21 that predicts behavior of a general adult, it is desirable that an element of "human age" be close to a distribution of data such as demographics.

The control unit 11 inputs the explanatory data vector xn acquired in step S501 to the existing model 21 to acquire the objective data vector yn (step S502). The control unit 11 associates the explanatory data vector xn with the objective data vector yn and records the data vectors in the main memory device 12 or the auxiliary memory device 13 (step S503).

The control unit 11 determines whether or not to end generation of a set of the explanatory data vector xn and the objective data vector yn (step S504). For example, the control unit 11 determines to end in step S504 when processing of the explanatory data vector xn recorded in the training data is ended. The control unit 11 may determine to end the process when a predetermined number of sets determined in advance is generated.

When it is determined that the process is not to end (NO in step S504), the control unit 11 returns to step S501. When it is determined that the process is to end (YES in step S504), the control unit 11 generates the explanatory matrix X based on data recorded in step S503 (step S505). The control unit 11 generates the objective matrix Y based on the data recorded in step S503 (step S506). The control unit 11 calculates the objective inverse matrix Y†, which is a Moore-Penrose generalized inverse matrix, based on the objective matrix Y (step S507). The control unit 11 calculates the interpretation matrix A†, which is a vector product of the explanatory matrix X and the objective inverse matrix Y† (step S508). The control unit 11 ends the process.

Hereinafter, a description will be given of an outline of a method of analyzing the behavior of the existing model 21 by plotting the generated interpretation matrix A†.

### [Global feature importance]

Global feature importance means a degree to which each element included in the explanatory data vector xn contributes to a specific prediction result output from the existing model 21. The user can detect the overall behavior of the existing model 21 based on the visualized global feature importance.

As mentioned above, an element at row a and column b of the interpretation matrix A† indicates an influence of an ath element of the explanatory data vector xn on a bth element of the objective data vector yn. For example, a degree of influence of each element included in the explanatory data vector xn on a specific item in the objective data vector yn can be visualized by a bar graph or a line graph in which a first axis represents an item name corresponding to each element of the explanatory data vector xn and a second axis represents a value of any column of the interpretation matrix A†. Specific examples of a chart that visualizes the global feature importance will be described later.

### [Representative estimation instance]

A representative estimation instance x* means an ideal or typical explanatory data vector xn causing the objective data vector yn output from the existing model 21 to be in a specific state. The representative estimation instance x* is a vector having the same number of elements as that of the explanatory data vector xn.

The representative estimation instance x* is calculated by the vector product of the interpretation matrix A† and the objective data vector yn. An equation for calculating the representative estimation instance x* is illustrated in Equation (7). $x * = A † yn$

The following description will be given using, as an example, a case in which the objective data vector yn is a unit objective vector yuk in which a kth element is 1 and other elements are 0. k is a natural number equal to or less than the number of elements of the objective data vector yn. An equation for calculating the representative estimation instance x* when the objective data vector yn is the unit objective vector yuk is illustrated in Equation (8), and definition of an ith element yuk(i) of the unit objective vector yuk is illustrated in Equation (9), respectively.
[Equation 1] $\begin{matrix}x * = A † . yuk \left(8\right) \\ yuk \left(i\right) = 1 if i = k \\ yuk \left(i\right) = 0 if i / = k \left(9\right)\end{matrix}$

Based on the representative estimation instance x*, the user can detect importance of each item of the explanatory data vector xn when a specific objective data vector yn is output. Furthermore, based on the representative estimation instance x*, the user can obtain clues for interpreting the behavior of the existing model 21. A specific example of the representative estimation instance x* will be described later.

### [Local feature importance]

The local feature importance vector L means a degree to which each element included in a specific explanatory data vector xn contributes to the objective data vector yn output from the existing model 21. The local feature importance vector L is a vector having the same number of elements as that of the explanatory data vector xn.

In the following description, the specific explanatory data vector xn is described as a target explanatory vector xo. The target explanatory vector xo may be data included in the training data or data created separately from the training data. A description will be given of an example in which the objective data vector yn is the unit objective vector yuk. The local feature importance vector L is calculated by Equation (10).
[Equation 2] $L = A † yuk . * xo$ .* denotes the Hadamard product.

For example, the local feature importance vector L can be visualized using a bar graph or a line graph in which a first axis represents an item name corresponding to each element included in the local feature importance vector L, i.e., an item name corresponding to each element included in the explanatory data vector xn, and a second axis represents a value of each element included in the local feature importance vector L, respectively. Specific examples of a chart that visualizes the local feature importance vector L will be described later.

The user can interpret the reason why the objective data vector yn has been output from the existing model 21 receiving input of the explanatory data vector xn based on the local feature importance vector L. The user can detect an element of the explanatory data vector xn that affects the objective data vector yn based on the local feature importance vector L. Specific examples of the local feature importance vector L will be described later.

### [Similarity distribution plot]

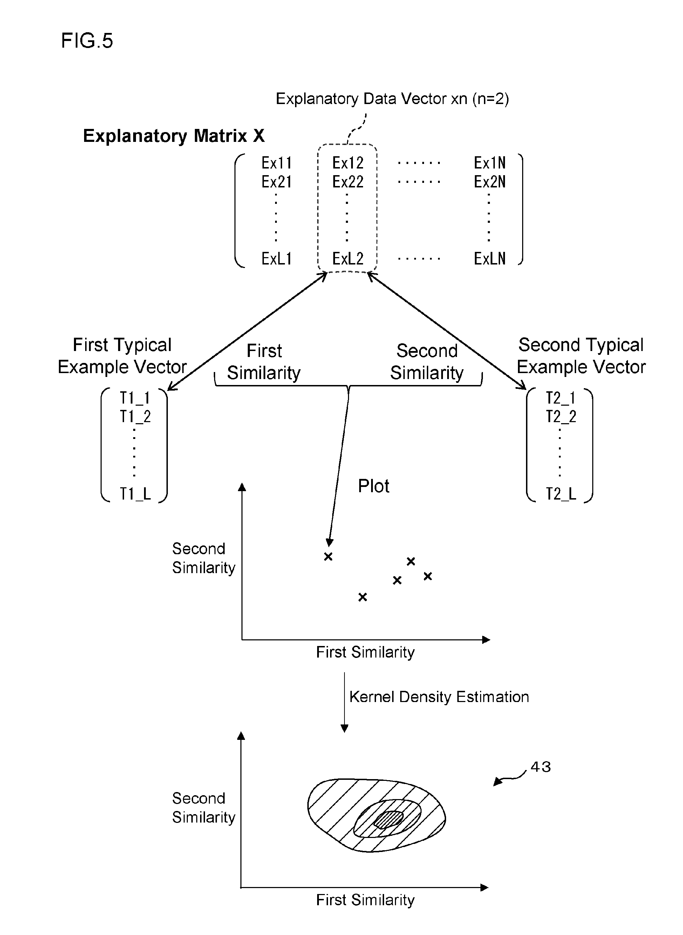

FIG. 5 is an explanatory diagram describing an outline of a method of creating the similarity distribution plot 43. First, two representative estimation instances x*, namely, a first typical example vector and a second typical example vector, are calculated based on Equation (8). Different ks are used when calculating the first typical example vector and when calculating the second typical example vector.

An explanatory data vector xn that satisfies a specific condition is selected from the explanatory matrix X. For example, when the explanatory data vector xn uses training data used for machine learning, it is desirable to select the explanatory data vector xn in which ground truth data corresponds to the unit objective vector yuk when the first typical example vector is calculated. Of the objective data vectors yn output from the existing model 21, the explanatory data vector xn whose kth element is greater than a predetermined threshold may be selected.

For the selected explanatory data vector xn, first similarity, which is similarity with respect to the first typical example vector, is calculated. For similarity, for example, it is possible to use the inverse of an inter-vector distance between the explanatory data vector xn and the first typical example vector based on any definition such as the Euclidean distance, the Manhattan distance, or the Hamming distance. For example, cosine similarity may be used for similarity.

Similarly, second similarity between the selected explanatory data vector xn and the second typical example vector is calculated. Each explanatory data vector xn is plotted on a two-dimensional graph using a first similarity value on an x-axis and a second similarity value on a y-axis.

Kernel density estimation is performed to apply, for example, an RBF kernel to plotted data, and the smooth similarity distribution plot 43 is generated. The user can intuitively recognize the behavior of the existing model 21 related to the selected explanatory data vector xn from the similarity distribution plot 43. Note that individual plots may be directly displayed without performing kernel density estimation.

When the individual explanatory data vectors xn are plotted, kernel density estimation may be performed. By overlapping the respective plots, the smooth similarity distribution plot 43 is generated.

The similarity distribution plot 43 crated using the explanatory data vectors xn selected under a plurality of conditions, respectively, may be overlapped and displayed. A three-dimensional similarity distribution plot 43 may be generated using three representative estimation instances x*. A specific example of the similarity distribution plot 43 will be described later.

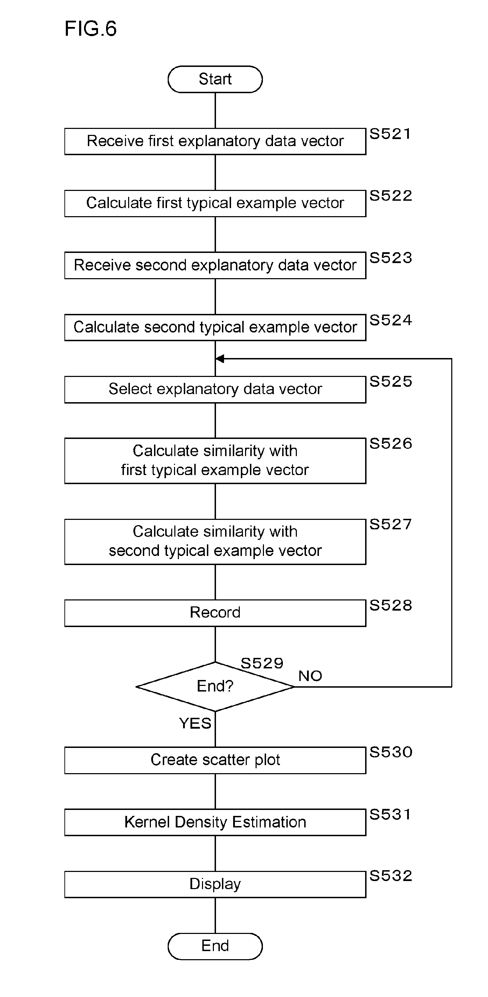

FIG. 6 is a flowchart describing a processing flow of a program for generating the similarity distribution plot 43. The control unit 11 receives designation related to a first explanatory data vector xn (step S521). For example, the control unit 11 receives designation of k and uses the unit objective vector yuk for the first explanatory data vector xn. This unit objective vector yuk is an example of a first unit vector. The control unit 11 calculates the representative estimation instance x* based on Equation (7). The control unit 11 uses the calculated representative estimation instance x* as the first typical example vector (step S522).

The control unit 11 receives designation related to the second explanatory data vector xn (step S523). For example, the control unit 11 receives designation of k and uses the unit objective vector yuk for the second explanatory data vector xn. This unit objective vector yuk is an example of a second unit vector. The control unit 11 calculates the representative estimation instance x* based on Equation (7). The control unit 11 uses the calculated representative estimation instance x* as the second typical example vector (step S524).

The control unit 11 selects one explanatory data vector xn that satisfies a predetermined condition from the explanatory matrix X (step S525). The control unit 11 calculates similarity between the explanatory data vector xn selected in step S525 and the first typical example vector calculated in step S522 (step S526). The control unit 11 calculates similarity between the explanatory data vector xn selected in step S525 and the second typical example vector calculated in step S524 (step S527). The control unit 11 associates similarity calculated in step S526 with similarity calculated in step S527, and records the similarities in the main memory device 12 or the auxiliary memory device 13 (step S528).

The control unit 11 determines whether or not to end calculation of similarity (step S529). Specifically, for example, the control unit 11 determines to end calculation of similarity when processing of the explanatory data vector xn that satisfies a predetermined condition in the explanatory matrix X is ended. The control unit 11 may determine to end calculation of similarity when calculation of similarity is repeated a predetermined number of times.

When it is determined not to end (NO in step S529), the control unit 11 returns to step S525. When it is determined to end (YES in step S529), the control unit 11 creates, for each piece of data recorded in step S528, a scatter plot in which a first axis represents similarity with respect to the first typical example vector and a second axis represents similarity with respect to the second typical example vector (step S530).

The control unit 11 performs kernel density estimation on the scatter plot created in step S530, and smooths a distribution of each plot in the scatter plot (step S531). In this way, the similarity distribution plot 43 is completed. The control unit 11 displays the completed similarity distribution plot 43 (step S532). Thereafter, the control unit 11 ends the process.

### [Example 1: Titanic Dataset]

A description will be given of an example of interpreting the existing model 21 generated using, as training data, a Titanic dataset which summarizes "the survival status of passengers on abord the Titanic, which sank in the North Atlantic Ocean after being hit by an iceberg in 1912".

The existing model 21 is a learning model trained to output each of a survival probability and a non-survival probability of a passenger when an explanatory data vector xn having 12 elements related to the passenger is input. Since a method of generating a machine learning model using supervised machine learning is publicly known, the generation method will be omitted. The elements of the explanatory data vector xn are illustrated in Table 1.

**[Table 1]**

| Name (Original data) | Name (English) | Meaning |
|---|---|---|
| Age | Age | Age |
| SibSp | Number of A-type co-passengers | Number of siblings or spouses on board the Titanic together |
| Parch | Number of B-type co-passengers | Number of parents or children on board the Titanic together |
| Fare | Passenger fare | Passenger fare |
| Pclass_1 | First-class cabin | Being a first-class passenger |
| Pclass_2 | Second-class cabin | Being a second-class passenger |
| Pclass_3 | Third-class cabin | Being a third-class passenger |
| Sex_female | Female | Being a woman |
| Sex_male | Male | Being a man |
| Embarked_C | Embark from Port C | Departing from a port of Cherbourg |
| Embarked_Q | Embark from Port Q | Departing from a port of Queenstown |
| Embarked_S | Embark from Port S | Departing from a port of Southampton |

In Table 1, eight items from first-class cabin to embark from Port S are expressed as binary values, namely, 1 for YES and 0 for NO.

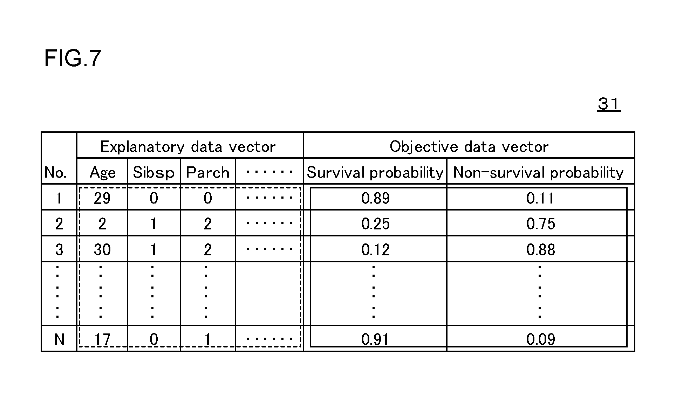

FIG. 7 is an explanatory diagram describing a record layout of an explanatory-objective DB 31. The explanatory-objective DB31 has a No. field, an explanatory data vector field, and an objective data vector field. The explanatory data vector field has subfields corresponding to the respective elements of the explanatory data vector xn illustrated in Table 1, such as an Age field, a SibSp field, and a Parch field. The objective data vector field has a survival probability field and a non-survival probability field.

Consecutive numbers from 1 to N are recorded in the No. field. An element of the explanatory data vector xn is recorded in each subfield of the explanatory data field. A probability that a passenger having an attribute of the explanatory data vector xn will survive is recorded in the survival probability field. A probability that a passenger having an attribute of the explanatory data vector xn will not survive is recorded in the non-survival probability field. For each record, the sum of a value recorded in the survival probability field and a value recorded in the non-survival probability field is 1.

In step S503 of the program described using FIG. 4, the control unit 11 adds one record to the explanatory-objective DB 31. A part surrounded by a dashed line of FIG. 7 is the transposed matrix of the explanatory matrix X illustrated in FIG. 2. A part surrounded by a solid line of FIG. 7 is the transposed matrix of the objective matrix Y illustrated in FIG. 2.

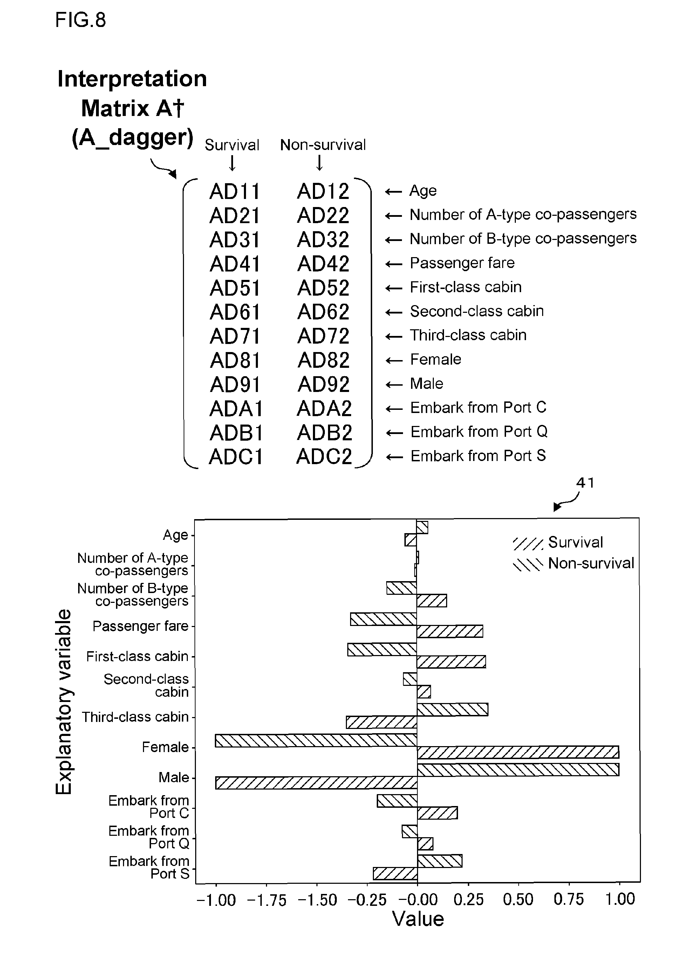

FIG. 8 is an explanatory diagram describing the global feature importance graph 41. An upper side of FIG. 8 schematically illustrates the interpretation matrix A† calculated in step S508 of the program described using FIG. 4. The interpretation matrix A† is a matrix having 12 rows and 2 columns. Numbers of the elements of the interpretation matrix A† in a vertical direction, i.e., the third character, are expressed in hexadecimal. That is, A indicates 10, B indicates 11, and C indicates 12.

As described above, an element at row a and column b of the interpretation matrix A† indicates an influence of an ath element of the explanatory data vector xn on a bth element of the objective data vector yn. Therefore, AD11 indicates an influence of an age of a passenger on survival of the passenger, and AD12 indicates an influence of an age of a passenger on non-survival of the passenger.

A lower side of FIG. 8 illustrates the global feature importance graph 41. A vertical axis represents item names of the explanatory data vector xn. A horizontal axis represents values of the respective elements of the interpretation matrix A†. Left-down slanting hatching indicates an influence of each element on a value of a left column of the interpretation matrix A†, i.e., survival of a passenger. Right-down slanting hatching indicates an influence of each element on a value of a right column of the interpretation matrix A†, i.e., non-survival of a passenger.

From FIG. 8, it can be seen that the number of passengers A hardly influences on whether the passengers survive or not. Therefore, it can be seen that data on the number of passengers A is unnecessary to predict whether the passengers survive or not. For example, by deleting the number of passengers A from explanatory variables, the user can reduce the amount of computation of the existing model 21 without affecting prediction accuracy.

Similarly, from FIG. 8, it can be seen that a factor that has a large influence on whether a passenger survives is whether the passenger is female, and a factor that has a large influence on whether a passenger does not survive is whether the passenger is male. It can be seen that the gender of a passenger has a larger influence on whether or not the passenger survives when compared to other factors.

Table 2 illustrates representative estimation instances for survivors and non-survivors calculated based on Equation (8), respectively.

**[Table 2]**

| Name (English) | Survivor (k=1) | Non-survivor (k=2) |
|---|---|---|
| Age | 28.56 | 30.05 |
| Number of A-type co-passengers | 0.4945 | 0.2851 |
| Number of B-type co-passengers | 0.5473 | 0.2851 |
| Passenger fare | 55.00 | 19.87 |
| First-class cabin | 0.4335 | 0.1316 |
| Second-class cabin | 0.2465 | 0.1903 |
| Third-class cabin | 0.3200 | 0.6781 |
| Female | 0.9615 | -0.018 |
| Male | 0.039 | 1.018 |
| Embark from Port C | 0.3076 | 0.1439 |
| Embark from Port Q | 0.1210 | 0.0774 |
| Embark from Port S | 0.5714 | 0.7788 |

Table 2 indicates that a typical survivor is a woman whose passenger fare is relatively high, and a typical non-survivor is a man whose passenger fare is relatively low.

Next, an example of the local feature importance will be described. When the local feature importance is calculated, a target explanatory vector xo was created for two characters, Rose, a survivor, and Jack, a non-survivor, named after the characters in the 1997 movie Titanic. The created target explanatory vector xo is illustrated in Table 3.

**[Table 3]**

| Name (English) | Rose | Jack |
|---|---|---|
| Age | 17 | 19 |
| Number of A-type co-passengers | 0 | 0 |
| Number of B-type co-passengers | 0 | 0 |
| Passenger fare | 33.3 | 0.0 |
| First-class cabin | 1 | 0 |
| Second-class cabin | 0 | 0 |
| Third-class cabin | 0 | 1 |
| Female | 1 | 0 |
| Male | 0 | 1 |
| Embark from Port C | 0 | 0 |
| Embark from Port Q | 0 | 0 |
| Embark from Port S | 0 | 0 |

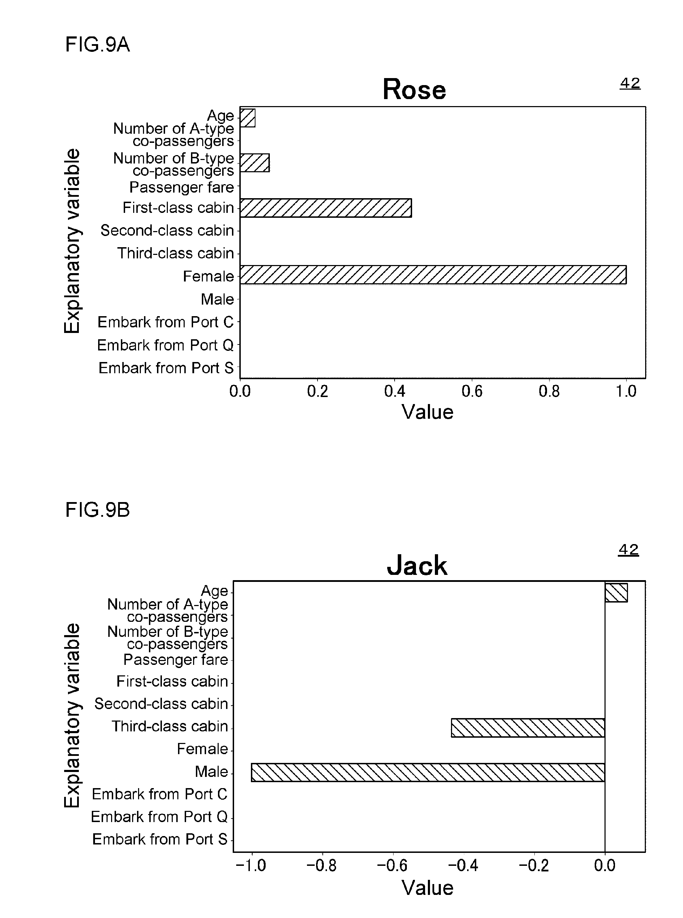

FIG. 9A and FIG. 9B are examples of the local feature importance graph 42. The local feature importance vector L related to survival of Rose, calculated based on Equation (10), is illustrated in the local feature importance graph 42 of FIG. 9A. The transposed matrix of (1, 0) was used for the unit objective vector yuk. A vertical axis represents an item name of the target explanatory vector xo. A horizontal axis represents a value of each element of the local feature importance vector L. According to FIG. 9A, a first reason for survival of Rose is that Rose is a woman, and a second reason is that Rose is a passenger in a first-class cabin.

The local feature importance vector L related to non-survival of Jack, calculated based on Equation (10), is illustrated in the local feature importance graph 42 of FIG. 9B. The transposed matrix of (0, 1) was used for the unit objective vector yuk. A vertical axis represents an item name of the target explanatory vector xo. A horizontal axis represents a value of each element of the local feature importance vector L. According to FIG. 9B, a first reason for non-survival of Jack is that Jack is a man, and a second reason is that Jack is a passenger in a third-class cabin.

As illustrated in FIG. 9A and FIG. 9B, the interpretation matrix A† can be used to create the local feature importance graph 42 related to any target explanatory vector xo. The user can use the local feature importance graph 42 to interpret the explanatory data vector xn not included in the explanatory matrix X.

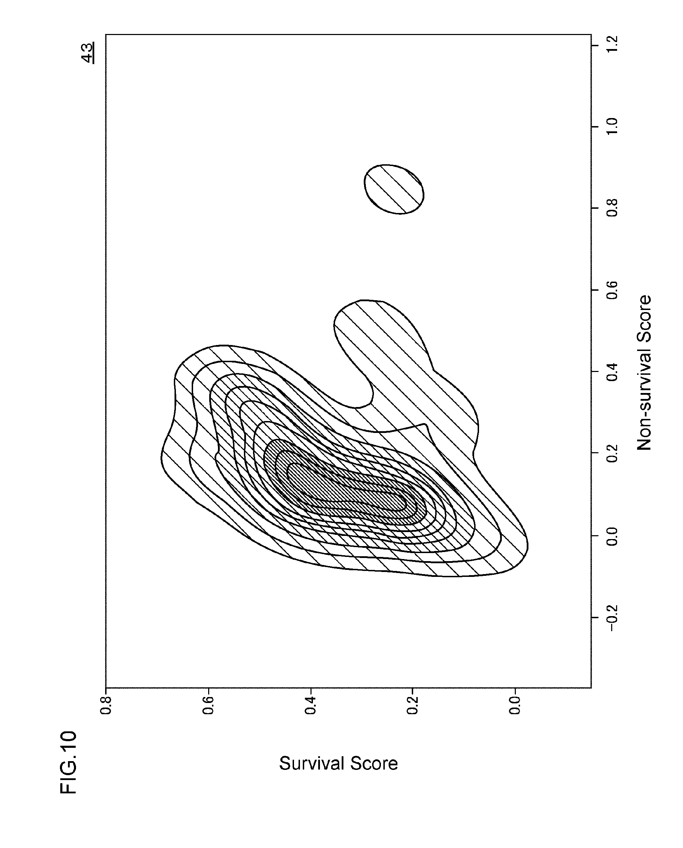

FIGS. 10 to 12 are examples of the similarity distribution plot 43. FIG. 10 illustrates the similarity distribution plot 43 related to the survivors. An outline of processing when creating FIG. 10 will be described. The first typical example vector calculated by the control unit 11 in step S522 of the program described using FIG. 6 is equal to the representative estimation instance of the non-survivors illustrated in Table 2. The second typical example vector calculated by the control unit 11 in step S524 is equal to the representative estimation instance of the survivors illustrated in Table 2. In step S525, the control unit 11 selects the explanatory data vector xn for the survivors from the explanatory matrix X.

A horizontal axis of FIG. 10 represents a non-survival score corresponding to similarity with respect to the representative estimation instance of the non-survivor. A higher non-survival score means higher similarity with respect to the representative estimation instance of the non-survivor. A vertical axis of FIG. 10 represents a survival score corresponding to similarity with respect to the representative estimation instance of the survivor. A higher survival score means higher similarity with respect to the representative estimation instance of the survivor. Finer left-down slanting hatching means a denser distribution of the explanatory data vector xn related to the survivor. FIG. 10 is an example of a first distribution plot.

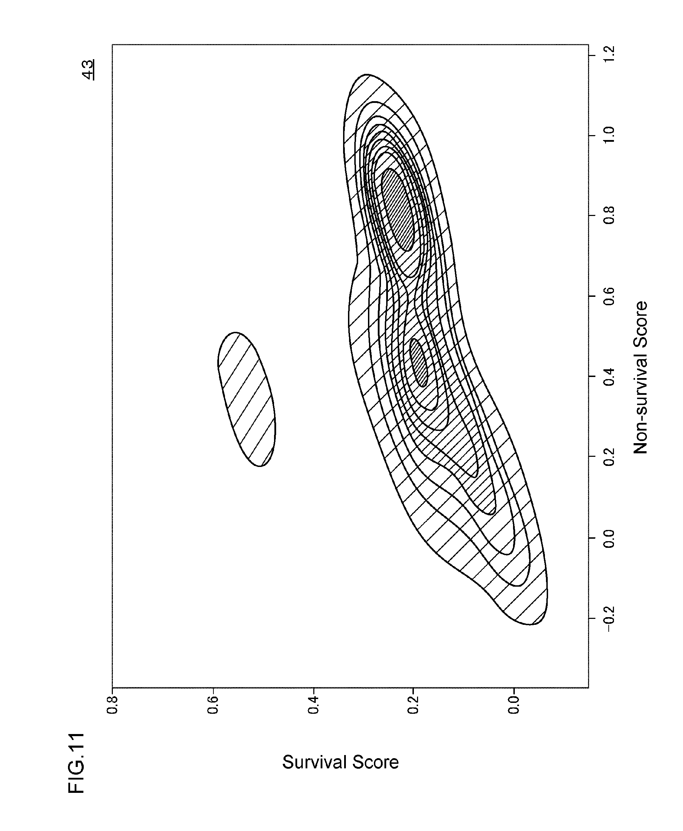

FIG. 11 illustrates the similarity distribution plot 43 related to the non-survivors. An outline of processing for creating FIG. 11 will be described. Processing of steps S522 and S524 of the program described using FIG. 6 is the same as that when creating FIG. 10. In step S525, the control unit 11 selects the explanatory data vector xn related to the non-survivors from the explanatory matrix X.

A vertical axis and a horizontal axis of FIG. 11 are the same as those of FIG. 10, and thus a description thereof will be omitted. Finer right-down slanting hatching means a denser distribution of the explanatory data vector xn related to the non-survivors. FIG. 11 illustrates a second distribution plot.

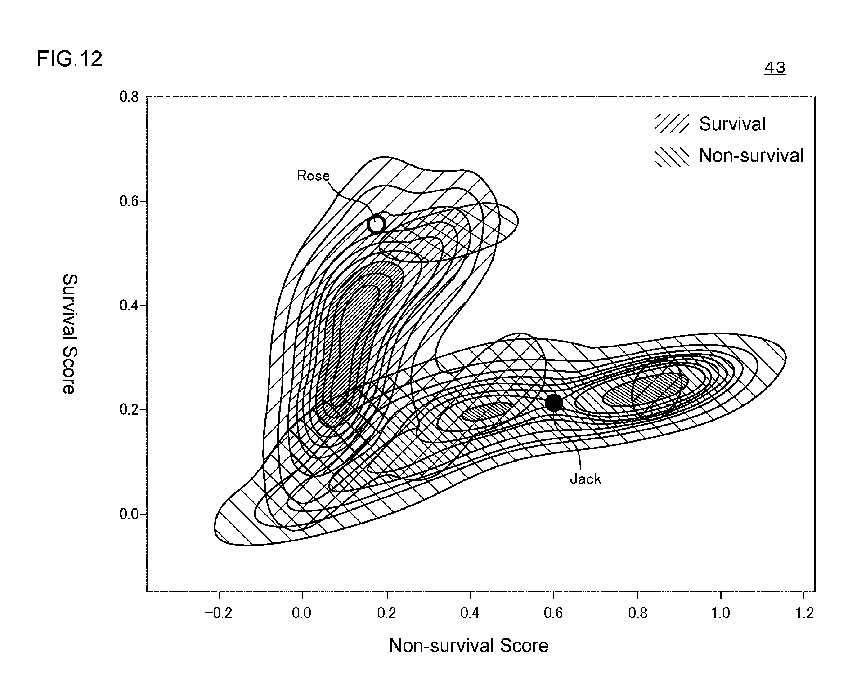

FIG. 12 illustrates the similarity distribution plot 43 in which FIG. 10 and FIG. 11 are overlapped. That is, a distribution related to the survivors and a distribution related to the non-survivors are overlapped on one figure. A white circle indicates a non-survival score and a survival score related to Rose described in Table 3. A black circle indicates a non-survival score and a survival score related to Jack described in Table 3.

From FIG. 12, there is a region in which a distribution of survivors and a distribution of non-survivors overlap. The user can understand that it is difficult to predict whether a passenger will survive or not in this region. FIG. 12 illustrates the similarity distribution plot 43 in which the first distribution plot and the second distribution plot are overlapped and displayed.

When a value of an intermediate layer of the existing model 21 can be acquired, the interpretation matrix A† may be generated in each of a part from an input layer that receives the explanatory data vector xn to the intermediate layer and a part from the intermediate layer to an output layer that outputs the objective data vector yn. By generating the interpretation matrix A† in a layered manner, it is possible to improve interpretability of the existing model 21.

### [Example 2: MNIST (Mixed National Institute of Standards and Technology database) dataset]

A description will be given of an example of interpreting the existing model 21 for classifying handwritten digits, which has been generated using the "MNIST dataset" as training data. The MNIST dataset is a dataset that records a handwritten digit image including a total of 784 8-bit grayscale pixels obtained by arranging 28 pixels in each of a horizontal direction and a vertical direction, in association with digits, which are ground truth data.

The existing model 21 is a learning model trained to output a probability that a digit is each of 0 to 9 in response to input of a grayscale image having 28 pixels in each of the horizontal direction and the vertical direction. The explanatory data vector xn is a 784-element vector in which luminance of 784 pixels is arranged in a predetermined order. The objective data vector yn is a 10-element vector in which a probability that a digit is each of 0 to 9 is arranged.

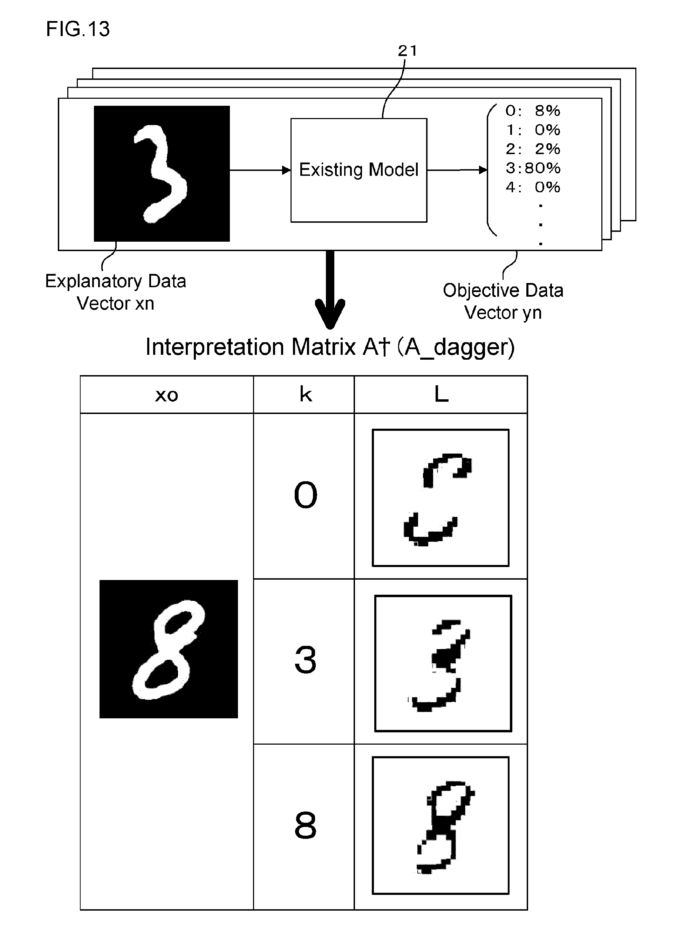

FIG. 13 is an explanatory diagram describing local feature importance related to the existing model 21. As illustrated in an upper part of FIG. 13, a process of inputting the explanatory data vector xn to the existing model 21 and acquiring the objective data vector yn is repeated, and the interpretation matrix A† is calculated through the procedure described using FIG. 2. The interpretation matrix A† is a matrix having 784 rows and 10 columns.

A lower side of FIG. 13 illustrates three examples of the local feature importance vector L in table format. When a digit image of the target explanatory vector xo is input to the existing model 21, the local feature importance vector L is illustrated for each of cases where a digit is determined to be 0, 3, and 8. Note that FIG. 13 illustrates each handwritten character and the local feature importance vector L converted into binary values of black and white. When it is determined to be each digit, an emphasized image is displayed in black.

Using the local feature importance vector L, the user can recognize that upper and lower parts of the handwritten character make a contribution when the target explanatory vector xo is determined to be 0, a right part of the handwritten character makes a contribution when the target explanatory vector xo is determined to be 3, and nearly the entire handwritten character makes a contribution when the target explanatory vector xo is determined to be 8.

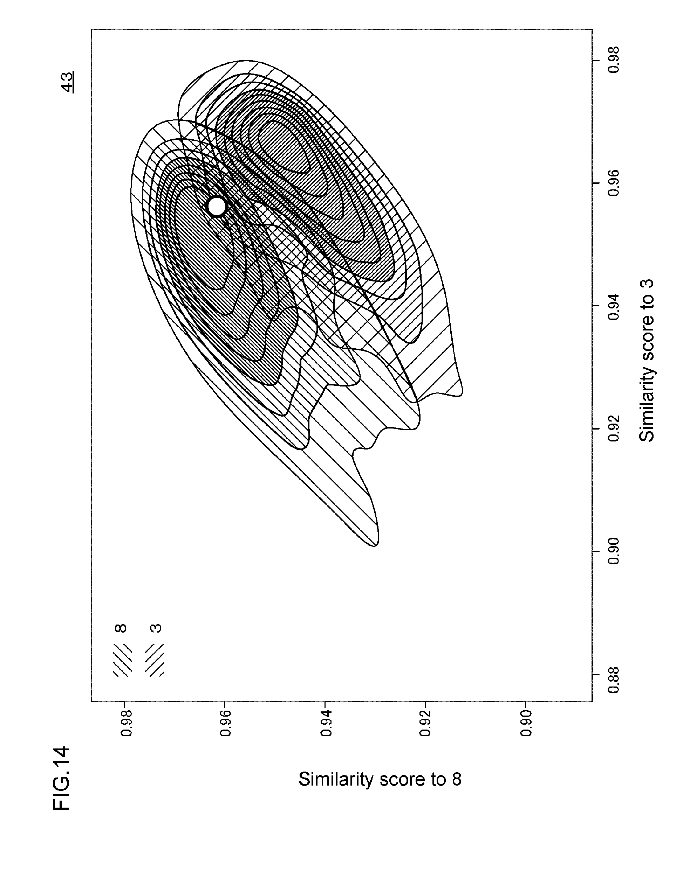

FIG. 14 is an example of the similarity distribution plot 43 related to the existing model 21. A horizontal axis is a similarity score with respect to the representative estimation instance x* determined to be "3". A vertical axis is a similarity score with respect to the representative estimation instance x* determined to be "8". A white circle indicates a position where the target explanatory vector xo illustrated on the lower right of FIG. 13 is plotted.

In the MNIST dataset, a distribution of the explanatory data vector xn whose ground truth data is "8" is indicated by left-down slanting hatching, and a distribution of the explanatory data vector xn whose ground truth data is "3" is indicated by right-down slanting hatching. A part having denser hatching means a denser distribution.

Since there is a large overlap between a region of "3" and a region of "8", the user can recognize that 3 and 8 are easily erroneously determined. Although not illustrated in the figure, for example, a region of "0" and a region of "1" do not overlap, and the user can recognize that "0" and "1" are not easily erroneously determined.

The existing model 21 may be, for example, a learning model that receives input of a sentence and outputs a keyword. The existing model 21 may be, for example, a learning model that receives input of an image and outputs a name of a subject. For any other existing model 21, the interpretation matrix A† can be calculated and used to interpret behavior.

### [Modification Example 1]

This modification example relates to a method of rapidly generating the interpretation matrix A†. A description of a part common to Embodiment 1 will be omitted. In this modification example, the existing model 21 is generated by supervised machine learning.

Instead of repeating an operation of inputting the explanatory data vector xn to the existing model 21 to acquire the objective data vector yn, the control unit 11 extracts a set of the explanatory data vector xn and the objective data vector yn from training data to generate the explanatory matrix X and the objective matrix Y.

According to this modification example, the interpretation matrix A† can be calculated before completing generation of the existing model 21. For example, the user can predict the behavior of the existing model 21 using the interpretation matrix A† before generating the existing model 21, and take measures such as increasing the training data when the existing model 21 does not have the desired characteristics.

### [Modification Example 2]

This modification example relates to a method of regularizing the objective matrix Y using Ridge regression, that is, L2 norm regularization. A description of a part common to Embodiment 1 will be omitted.

In this modification example, the control unit 11 calculates the generalized inverse matrix Y† of Y by using Equation (11) instead of Equation (2) in step S507 of the flowchart described using FIG. 4. $Y † = YT \left(Y YT-λE\right) - 1$
λ denotes a positive real number.
E denotes an identity matric having M rows and M columns.

According to this modification example, an appropriate interpretation matrix A† can be calculated even for a complex existing model 21 having a large number of parameters or interactions between parameters.

### [Modification Example 3]

This modification example relates to a method of regularizing the objective matrix Y using Lasso regression, that is, L1 norm regularization. A description of a part common to Embodiment 1 will be omitted.

In this modification example, in step S507 of the flowchart described using FIG. 4, the control unit 11 calculates the generalized inverse matrix Y† of Y, and then regularizes the generalized inverse matrix Y† of Y using a known iterative algorithm.

In this modification example, an appropriate interpretation matrix A† can be calculated even for a complex existing model 21 having a large number of parameters or interactions between parameters. Note that the regularization method is not limited to Ridge regression of Modification example 2 and Lasso regression of this modification example. For example, a publicly known method such as ElasticNet can be used for regularization.

A program is an example of a program product. A computer program can be deployed on a single computer or a single site, or loaded to be executed on a plurality of computers distributed across a plurality of sites and interconnected by a communications network.

The technical features (constituent elements) described in each embodiment can be combined with each other, and by combining the technical features, new technical features can be formed.

The embodiments disclosed herein are illustrative in all respects and should not be considered as limiting. The scope of the invention is defined by the claims, not by the above meaning, and is intended to include all modifications within the scope and meaning equivalent to the claims.

Independent claims and dependent claims described in the claims may be combined with each other in any combination, regardless of the reference format. Furthermore, the claims are in a format in which a claim references two or more other claims (multi-claim). However, the format is not limited thereto. The claims may be written in a format in which a multi-claim references at least one multi-claim (multi-multi claim).

### Reference Signs List

- 10: information processing device
- 11: control unit
- 12: main memory device
- 13: auxiliary memory device
- 14: communication unit
- 15: display unit
- 16: input unit
- 19: reading unit
- 21: existing model (existing machine learning model)
- 31: explanatory-objective DB
- 41: global feature importance graph (chart)
- 42: local feature importance graph (chart)
- 43: similarity distribution plot (chart)
- 96: portable recording medium
- 97: program
- 98: semiconductor memory

## Claims

1. An information processing method in which a computer executes processing of:
recording a plurality of sets of an explanatory data vector input to an existing machine learning model and an objective data vector output from the machine learning model in association with each other;
calculating an interpretation matrix which is a vector product of an explanatory matrix in which a plurality of sets of the explanatory data vector is arranged and a generalized inverse matrix of an objective matrix in which the objective data vector is arranged in an order corresponding to the explanatory data vector; and
outputting a chart related to the interpretation matrix.

2. The information processing method according to claim 1, wherein the generalized inverse matrix of the objective matrix is a Moore-Penrose generalized inverse matrix of the objective matrix.

3. The information processing method according to claim 1, wherein the chart is a graph in which a first axis represents an item name corresponding to an individual element of the explanatory data vector, and a second axis represents a value of an element for each column included in the interpretation matrix.

4. The information processing method according to claim 1, wherein:
the computer further executes processing of:
acquiring an explanatory data vector; and
generating a unit objective vector in which one element serving as an object to display a local feature importance is 1 and other elements are 0 in the objective data vector, and
the chart is a graph in which a first axis represents an item name corresponding to an individual element of the explanatory data vector, and a second axis represents a value of an element included in a local feature importance vector calculated by Equation (1):
[Equation 1] 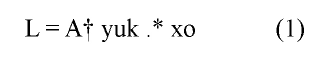
where L denotes a local feature importance vector,
A† denotes an interpretation matrix,
yuk denotes a unit objective vector whose kth element is 1,
k denotes a natural number indicating an element serving as an object to display a local feature importance,
xo denotes an explanatory data vector serving as an object to display a local feature importance, and
.* denotes a Hadamard product.

5. The information processing method according to claim 1, wherein the computer further executes processing of:
calculating a first typical example vector which is a vector product of the interpretation matrix and a first unit vector in which one element of the objective data vector is 1 and other elements are 0;
calculating a second typical example vector which is a vector product of the interpretation matrix and a second unit vector in which other elements of the objective data vector are 1 and other elements are 0; and
the chart is a distribution plot obtained by performing kernel density estimation after plotting similarity with respect to the first typical example vector on a horizontal axis and similarity with respect to the second typical example vector on a vertical axis for each explanatory data vector selected from the explanatory matrix.

6. The information processing method according to claim 5, wherein:
the explanatory data vector is the same as explanatory data in training data used for machine learning of the machine learning model, and
the chart is a plot obtained by overlapping and displaying a first distribution plot created using explanatory data in which ground truth data in the training data corresponds to one element when the first typical example vector is calculated and a second distribution plot created using explanatory data in which ground truth data in the training data corresponds to one element when the second typical example vector is calculated.

7. The information processing method according to any one of claims 1 to 5, wherein the explanatory data vector is the same as explanatory data in training data used for machine learning of the machine learning model.

8. A program causing a computer to execute processing of:
recording a plurality of sets of an explanatory data vector input to an existing machine learning model and an objective data vector output from the machine learning model in association with each other;
calculating an interpretation matrix which is a vector product of an explanatory matrix in which a plurality of sets of the explanatory data vector is arranged and a generalized inverse matrix of an objective matrix in which the objective data vector is arranged in an order corresponding to the explanatory data vector; and
outputting a chart related to the interpretation matrix.

9. An information processing device comprising a control unit,
wherein the control unit is configured to:
record a plurality of sets of an explanatory data vector input to an existing machine learning model and an objective data vector output from the machine learning model in association with each other;
calculate an interpretation matrix which is a vector product of an explanatory matrix in which a plurality of sets of the explanatory data vector is arranged and a generalized inverse matrix of an objective matrix in which the objective data vector is arranged in an order corresponding to the explanatory data vector; and
output a chart related to the interpretation matrix.
